# EUROPÄISCHE PATENTANMELDUNG

(11) **EP 4 656 874 A1**
(43) Veröffentlichungstag der Anmeldung: **03.12.2025**
(21) Anmeldenummer: 24178464.4
(22) Anmeldetag: 28.05.2024
(51) Int. Cl.: F03D 7/04, F03D 17/00

(54) **VERFAHREN ZUR ERMITTLUNG VON LASTEN AUF WINDENERGIEANLAGEN**

(71) Anmelder: Wobben Properties GmbH, 26607 Aurich (DE)
(72) Erfinder: Damminger, Milan, 26607 Aurich (DE); Berger, Frederik, 26607 Aurich (DE); Traphan, Dominik, 26607 Aurich (DE)
(74) Vertreter: Eisenführ Speiser

(57) **Zusammenfassung**

Die vorliegende Erfindung betrifft Verfahren zur Ermittlung von Lasten auf Windenergieanlagen, umfassend Erstellen einer Gitterstruktur mit Gitterpunkten aus zufällig variierten Windbedingungen als Parameter, insbesondere umfassend eine Turbulenz, eine Turbulenzintensität und/oder eine Windscherung, Lastsimulation einer Windenergieanlage für jeden der Gitterpunkte, Bereitstellen eines Prädiktionsmodells zur Prädiktion von Lasten ausgehend von Windbedingungen, Trainieren des Prädiktionsmodells anhand der durchgeführten Lastsimulationen für jeden der Gitterpunkte, Ermitteln der Lasten für eine beliebige Kombination von Windbedingungen unter Verwendung des Prädiktionsmodells. Die Erfindung betrifft auch einen entsprechenden Trainingsdatensatz.

## Beschreibung

Die Erfindung betrifft ein Verfahren zur Ermittlung von Lasten auf Windenergieanlagen sowie einen Trainingsdatensatz zum Trainieren eines Prädiktionsmodells zur Prädiktion von Lasten ausgehend von Windbedingungen.

Windenergieanlagen sind bekannt. Die Planung und Konstruktion von Windenergieanlagen ist weithin so fortgeschritten, dass Abnutzung und Lebensdauer von Windenergieanlagen grob abgeschätzt werden können. Dennoch wurden an Windenergieanlagen Schäden beobachtet, deren Ursachen bislang nicht hinreichend geklärt sind. Als eine mögliche Ursache wurde eine standortspezifische Überschreitung der mechanischen Belastbarkeit durch Extremlasten auf Grund beispielsweiseextremer Turbulenzen für möglich gehalten. In Folge dessen sollten sämtliche Standorte von Windenergieanlagen mit einem entsprechenden Lastfall, beispielsweise einer Extremlast bei extremer Turbulenz, mit Standortbedingungen untersucht werden.

Auf Grund der großen Anzahl an Standorten ist eine Prüfung über den manuellen Weg allerdings nicht umsetzbar, weder durch Simulationen, noch durch ein systematisches Kombinieren aller Parameterkombinationen und Anwendung mathematischer Interpolationsverfahren.

Vor diesem Hintergrund war es eine Aufgabe der Erfindung ein Verfahren bereitzustellen, dass Lasten auf Windenergieanlagen unter spezifischen Standortbedingungen ermittelt. Es war zudem eine Aufgabe, den Datenumfang zu reduzieren und damit eine Erweiterbarkeit der Dimensionalität im Gegensatz zur vorbekannten Lösung zu ermöglichen. Zudem soll eine Vorhersage von mechanischen Lasten mit wesentlich schnelleren Antwortzeiten ermöglicht werden. Schließlich ist es eine Aufgabe, Bauteil- und Regelungsparameter in Abhängigkeit von Last- und Standortbedingungen vorherzusagen.

Gemäß einem ersten Aspekt der Erfindung wird die Aufgabe durch ein Verfahren zur Ermittlung von Lasten auf Windenergieanlagen gelöst, umfassend: Erstellen einer Gitterstruktur mit Gitterpunkten aus zufällig variierten Windbedingungen als Parameter, insbesondere umfassend eine Turbulenz, eine Turbulenzintensität und/oder eine Windscherung; Lastsimulation einer Windenergieanlage für jeden der Gitterpunkte; Erstellen eines Prädiktionsmodells zur Prädiktion von Lasten ausgehend von Windbedingungen; Trainieren des Prädiktionsmodells anhand der durchgeführten Lastsimulationen für jeden der Gitterpunkte; und Ermitteln der Lasten für eine beliebige Kombination von Windbedingungen unter Verwendung des Prädiktionsmodells.

Mit der vorliegenden Erfindung ist es also möglich, die Lasten einer möglichen Windenergieanlage für sämtliche Parameter eines Aufstellortes bestimmen zu können, indem für lediglich eine Teilmenge der möglichen Parameter, nämlich die auf den Gitterpunkten der Gitterstruktur liegenden Kombinationen von Parametern, die Lasten simuliert werden und weitere Kombination, die nicht auf den simulierten Gitterpunkten liegen, über ein trainiertes Prädiktionsmodell abgeleitet werden.

Die Simulation sämtlicher möglicher Parameterkombination ist zu aufwändig, sowohl bei der Frage der Speichernutzung als auch der Rechenkapazität, so dass es keine Möglichkeit darstellt, sämtliche Kombination von Parametern zu simulieren. Indem erfindungsgemäß ein geringer Teil der Kombinationen ausreicht, kann erheblich Aufwand bei dem Erstellen der Lastenvorhersage eingespart werden. Damit sinkt auch insbesondere der Energieverbrauch der Lastenvorhersage, was dem Nachhaltigkeitsgedanken gerade einer Technologie wie der Windenergie gerecht wird.

Um die Lücke zwischen der geringen Anzahl von simulierten Parameterkombination und allen möglichen Parameterkombinationen zu schließen, setzt die Erfindung ein trainiertes Prädiktionsmodell ein. Das Prädiktionsmodell wird anhand der tatsächlich simulierten Parameterkombinationen trainiert und sagt die Lasten für die weiteren, nicht simulierten Parameterkombinationen nach der Trainingsphase mit hoher Genauigkeit voraus.

Bekanntermaßen führt ein größerer Trainingsdatensatz oft zu höherer Genauigkeit, dies jedoch zu dem Preis des höheren Aufwands für die Erzeugung des Trainingsdatensatzes.

In diesem Zusammenhang bezeichnen Lasten sämtliche auf die Windenergieanlage wirkenden statischen und/oder dynamischen Lasten isoliert oder in Kombination betrachtet.

Die Wahl der betrachteten Last bzw. Lasten erfolgt den Anforderungen entsprechend. So können beispielsweise Lasten an einzelnen Komponenten der Windenergieanlage, insbesondere an Rotorblättern und/oder dem Turm, betrachtet werden. Rotorblätter und Türme von Windenergieanlagen sind traditionell Kostentreiber, so dass eine möglichst schlanke Auslegung erwünscht ist. Gerade bei einer schlanken Auslegung ohne signifikante Lastreserven ist eine genaue Abschätzung der Lasten besonders vorteilhaft. In einer Ausführung handelt es sich bei den Lasten um Schwenk- und/oder Schlaglasten von Rotorblättern, wobei in anderen Ausführungen auch andere Lasten vorteilhaft eingesetzt werden.

Mit einer Gitterstruktur wird der Parameterraum aufgespannt, wobei die unterschiedlichen betrachteten Windparameter unterschiedliche Dimensionen des Parameterraums aufspannen. Beispielsweise ist eine Dimension der Gitterstruktur eine Turbulenz oder Turbulenzintensität und eine andere Dimension eine Windgeschwindigkeit oder eine Windscherung. Die Dimension des Parameterraums ist nicht auf zwei oder drei eingeschränkt, besonders vorteilhaft eignet sich das Verfahren auch wenn eine höhere Dimensionalität des Parameterraums und damit der Gitterstruktur zur Anwendung kommt.

Gitterpunkte bezeichnen einen Punkt innerhalb der Gitterstruktur und somit eine Kombination aus je einem Wert jeder der Dimensionen der Gitterstruktur. Der Abstand der einzelnen Gitterpunkte ist nicht fest und auch die Anzahl der vorhandenen Gitterpunkte ist nicht festgelegt. Auch gibt es keine Mindest- und/oder Höchstwerte in den einzelnen Dimensionen.

Für jeden der Gitterpunkte wird dann eine Simulation der Lasten einer Windenergieanlage durchgeführt. Ein Gitter ist also, stark vereinfacht, die Menge der diskreten (Gitter-)Punkte, auf denen die Lösung berechnet bzw. simuliert wird.

Ein Gitter ist also eine Diskretisierung des Raumes bzw. Gebietes, der durch die Parameter aufgespannt ist. Es dient dazu, auf diesem mathematische Berechnungen durchführen zu können, die wegen seines unendlichen Charakters nicht direkt auf dem Gebiet bzw. dem Raum möglich sind. Für die Erstellung der Gitterstruktur wird auf bekannte Algorithmen zur Erstellung strukturierter oder unstrukturierter Gitter zurückgegriffen.

Als besonders effizient für die Einsparung von Ressourcen hat sich erfindungsgemäß die Verwendung unstrukturierter, insbesondere quasi zufälliger Gitterstrukturen herausgestellt, also aus zufällig variierten Windbedingungen. Indem Modelle trainiert anstatt mathematische Interpolationen durchgeführt werden können höhere Genauigkeiten bei signifikant verringertem Ressourceneinsatz erhalten werden.

Als Windbedingungen sind hier insbesondere eine Turbulenz, eine Turbulenzintensität und/oder eine Windscherung interessant, wobei auch andere Windbedingungen Berücksichtigung finden. Ein besonders bevorzugter Parameter ist eine mittlere meteorologische Turbulenzintensität, die kurzzeitige Schwankungen der Windgeschwindigkeit um den 10-Minuten-Mittelwert beschreibt. Die Windscherung kann sowohl eine (bevorzugt) vertikale als auch eine horizontale Windscherung umfassen.

Als Lastsimulation wird bezeichnet, dass insbesondere mechanische Lasten von Windenergieanlagen für die Windbedingungen simuliert werden. Die Lastsimulation ist also eine Simulation eines bestimmten Windenergieanlagentyps unter den gewählten Windbedingungen. Hierfür kann auch dem Fachmann bekannte Algorithmen zur Lastsimulation zurückgegriffen werden. Die Lastsimulation kann eine bestimmte oder mehrere Lasten der Windenergieanlage simulieren.

Das Prädiktionsmodell ist dazu ausgebildet, für eine bestimmte Kombination von Eingangsparametern eine Vorhersage zu treffen. Die Vorhersagegröße ist eine bestimmte Last, beispielsweise eine Blattlast bei einem Extremlastfall wie dem Extremlastfall DLC 1.3, wobei es sich hier natürlich nur um ein Beispiel handelt. Die Eingangsparameter umfassen insbesondere die Windbedingungen, können aber auch andere Parameter, wie von der Windenergieanlage abhängige Parameter einschließlich Nennleistung, Betriebsführung, etc., umfassen, wie im Weiteren auch noch im Detail ausgeführt wird.

Als Prädiktionsmodelle sind grundsätzlich sämtliche bekannte Modelle geeignet, die aus einer Kombination mehrerer Eingangswerte einen Vorhersagewert bestimmen können. Als besonders vorteilhaft im Kontext der vorliegenden Erfindung haben sich Entscheidungsbäume, Neuronale Netzte, Eureqa Modelle und Support Vector Machines herausgestellt.

Das Bereitstellen eines Prädiktionsmodells zur Prädiktion von Lasten umfasst ein Definieren der Eingangs- und/oder Ausgangsparameter des Prädiktionsmodells sowie des Modellalgorithmus. Gemäß der Erfindung können mehrere vorbereitete Eingangs- und Ausgangsparameterkombinationen sowie Modellalgorithmen vorbereitet sein und ein dem Anwendungsfall geeignetes Modell daraus ausgewählt werden. In anderen Fällen können die Modelle als Teil des Verfahrens erzeugt werden.

Durch das Bereitstellen von Trainings- und Beispieldaten, kann der Algorithmus Muster und Zusammenhänge erkennen und somit aus den Daten lernen. Dies ist bekanntermaßen als Trainieren des Prädiktionsmodell verstanden, wobei die bereitgestellten Trainingsdaten die simulierten Lasten unter Verwendung der Windbedingungen als Eingangsparameter sind. Wie erwähnt können optional auch zusätzliche Eingangsdaten herangezogen werden.

Schließlich erlaubt das Prädiktionsmodell ein Ermitteln der Lasten für eine beliebige Kombination von Windbedingungen. Ohne dass sämtliche Kombinationen von Windbedingungen simuliert werden müssen oder mathematisch zwischen simulierten Windbedingungen zu interpolieren ist, kann die Erfindung das gewünschte Ergebnis erhalten. Die Interpolation erfordert im Unterschied ebenfalls zu dem vorliegenden modellbasierten Verfahren eine große Zahl von strukturierten Gitterpunkten, um annähernde Vorhersageverlässlichkeit zu erreichen.

Gemäß einer vorteilhaften Ausgestaltung des ersten Aspekts der Erfindung, umfasst die Lastsimulation eine Mehrkörpersimulation der gesamten Windenergieanlage.

Mehrere Verfahren und Software-Tools zur Simulation von Lasten an Windenergieanlagen sind bekannt. Das Spektrum reicht von reduzierten Modellen für längere Simulationszeiten bis hin zu detaillierten Modellen von Antriebssträngen, von Stützstrukturen oder Rotorblättern mit Computational Fluid Dynamics (CFD) für die Aerodynamik.

Bekannte Simulationssoftware ist beispielsweise Flex5, Bladed, FAST, Finite Elemente Tools wie ANSYS, ABAQUS und Poseidon, das Multibody Simulation (MBS) Tool SIMPACK und CFD Codes einschließlich FLOWer, wobei hier natürlich auch weitere Programme verfügbar sind.

In diesem Zusammenhang haben sich besonders Mehrkörpersimulationen (MBS) als vorteilhaft herausgestellt, da sie besonders genaue Aussagen über die Lasten ermöglichen. Beispiele von Programmen, die zur Ausführung von MBS für Windenergieanlagen geeignet sind, ist Bladed von DNV-GL/Garrad Hassan und SIMPACK. Diese Tools ermöglichen High-Level-Simulationen von Windkraftanlagenmodellen. Nahezu jeder flexible Körper kann modelliert werden, wie z.B. Zahnradkontakte, Lagersteifigkeit im Antriebsstrang, das Pitchsystem etc. Je nachdem, welche Lasten erfindungsgemäß von Interesse sind, lassen sich die MBS Modelle unterschiedlich sogar modular aufbauen.

Gemäß einer weiteren vorteilhaften Ausgestaltung des ersten Aspekts der Erfindung, werden unterschiedliche Prädiktionsmodelle für unterschiedliche Lasten erstellt, insbesondere für Blattlasten und/oder Turmlasten.

Damit kann gewährleistet sein, dass die Vorhersagegenauigkeit einer bestimmten Last, beispielsweise einer Extremlast auf den Rotorblättern, möglichst hoch ist. Die Modelle sind demnach spezifisch auf die jeweilige Last optimiert und trainiert.

Gemäß einer weiteren vorteilhaften Ausgestaltung des ersten Aspekts der Erfindung, weist die Gitterstruktur eine über den Raum näherungsweise konstante Dichte an Gitterpunkten auf, und wird beispielsweise unter Verwendung eines Random Sequence Algorithmus erstellt.

Durch die näherungsweise konstante Dichte über den Raum wird vermieden, dass die für die Simulation bzw. die Erstellung von Trainingsdaten verwendeten Gitterpunkte in einem bestimmten Teilbereich des Parameterraumes sehr häufig und in anderen Bereichen nahezu nicht vorhanden sind.

Ein sogenannter Random Sequence Algorithmus erzeugt eine Sequenz von Gitterpunkten quasi-zufällig ("quasi random", eine sogenannte "low-discrepancy sequence", also Sequenz mit geringer Diskrepanz). Ein bekanntes und besonders bevorzugtes Verfahren zur Erzeugung einer solchen quasi-zufälligen Sequenz mit geringer Diskrepanz ist die "sobol sequence" Methode.

Folgen mit geringer Diskrepanz werden aufgrund ihrer häufigen Verwendung als Ersatz für gleichmäßig verteilte Zufallszahlen auch Quasizufallsfolgen genannt. Der Modifikator "Quasi" wird verwendet, um klarer zu verdeutlichen, dass die Werte einer Folge mit geringer Diskrepanz weder zufällig noch pseudozufällig sind, solche Folgen jedoch einige Eigenschaften von Zufallsvariablen und in bestimmten Anwendungen wie der Quasi-Monte-Carlo-Methode deren geringere Diskrepanz gemeinsam haben ist ein wichtiger Vorteil.

In einer bevorzugten Ausführung weist der Raum der Gitterstruktur drei Dimensionen auf, wobei diese die Windbedingungen Scherungsexponent, Luftdichte und Extremturbulenzintensität aufspannen.

Die Windgeschwindigkeit nimmt mit der Höhe zu und der Wind, der sich in der Nähe der Erdoberfläche bewegt, wird durch Hindernisse wie Gebäude, Bäume und Ähnliches gebremst. Die Verlangsamung des Windes entlang der Oberfläche ist die sogenannte "Windscherung". Windscherung kann ausgedrückt werden als: v / vₒ = (h / hₒ)^{α}, wobei v = die Windgeschwindigkeit in der Höhe h (m/s) ist, vₒ = die Windgeschwindigkeit in der Höhe hₒ (m/s) ist und α= der Windscherexponent oder Scherungsexponent. Um das Prädiktionsmodell auch für andere Nabenhöhen nutzen zu können, wird der Input Windscherungsexponent intern in einen Shear-Äquivalant umgerechnet, der äquivalente Lasten aufweist. Es ist eine Kenngröße, die innerhalb des Prädiktionsprozesses bestimmt wird, um die Modellgültigkeit zu erweitern (in diesem Fall auf beliebige Nabenhöhen, ohne mehrere Nabenhöhen beim Training betrachtet zu haben).

Es hat sich herausgestellt, dass der Scherungsexponent zusammen mit der Luftdichte und einer Extremturbulenzintensität eine vorteilhafte Vorhersage der Lasten mit hoher Genauigkeit erlaubt, wobei die Zahl der herangezogenen Parameter möglichst gering bleibt, um die Komplexität zu verringern.

Vorzugsweise umfassen demnach die Windbedingungen wenigstens drei aus den folgenden oder davon abgeleitete Parameter:
- Windgeschwindigkeit
- Turbulenzintensität
- Windscherung
- Schräganströmung
- Luftdichte.

Besonders bevorzugt umfassen die Windbedingungen alle der genannten oder davon abgeleitete Parameter.

Gemäß einer weiteren vorteilhaften Ausgestaltung des ersten Aspekts der Erfindung umfassen die Gitterpunkte zusätzlich zu den Windbedingungen bestimmte Kenngrößen.

Zu den weiteren Kenngrößen zählen insbesondere Kenngrößen, die die Lastgrößen beschreiben, wie bspw. Art (Kraft, Moment etc.), Position an der Windenergieanlage und Wirkrichtung, sowie Kenngrößen, die die Windenergieanlage selbst beschreiben wie bspw. Nennleistung und -drehzahl, Nabenhöhe, Rotordurchmesser etc.

Für das Training werden vorzugsweise außerdem Parameter eingestellt, die die Komplexität für die Modelle reduzieren. So lassen sich z.B. die Daten und damit auch die Modelle für diskrete Werte splitten. Dies kann für die Last-Art und Last-Position als auch für die Windgeschwindigkeit geschehen, da diese üblicherweise auch bei der Prädiktion nur diskret benötigt werden.

Gemäß einer weiteren vorteilhaften Ausgestaltung des ersten Aspekts der Erfindung, erstellt der Schritt des Erstellens einer Gitterstruktur mit Gitterpunkten, die Gitterstruktur mit Gitterpunkten aus zufällig variierten Windbedingungen als Parameter und Betriebsparametern, wobei die Betriebsparameter spezifische Betriebsparameter für unterschiedliche Betriebsmodi der Windenergieanlage sind und eine Nennleistung und/oder, eine Nenndrehzahl, und/oder eine Nennwindgeschwindigkeit, und/oder eine Anlaufwindgeschwindigkeit und/oder eine Abschaltwindgeschwindigkeit umfassen.

Die Betriebsparameter sind demnach entsprechend den zuvor beschriebenen anlagenspezifischen Kenngrößen und mit diesen austauschbar zu verwenden. In diesem Aspekt kommt nun die Betrachtung unterschiedlicher Betriebsmodi hinzu. Die unterschiedlichen Betriebsmodi sind beispielsweise ein normaler Betrieb, ein geräuschreduzierter Betrieb, ein Betrieb mit reduzierter Leistung etc. Es kann auch Sonderbetriebsarten wie Sturmregelungen oder ein Betrieb zur Vermeidung von Nachlaufeffekten enthalten sein. In allen diesen unterschiedlichen Betriebsmodi können unterschiedliche Lasten an der Windenergieanlage auftreten, so dass diese für die Vorhersage zu betrachten sind.

Die Betriebsmodi, auch als OMs von dem englischen *"operational mode"* bezeichnet, können z.B. über Kennzahlen wie Dreh-, Schub- und Leistungskurven, Produkt aus Leistungsbeiwert und mittlerer kinetischer Energie der Turbulenz (TKE) sowie der kritischen aerodynamischen Dämpfung charakterisiert werden, ohne darauf beschränkt zu sein.

Die so gebildeten ML-Modelle sind in der Lage Lastvorhersagen für beliebige neue Kombinationen von Inputparametern durchzuführen. So kann z.B. geprüft werden, ob die Entwicklung ein neues OMs oder eines neuen Bauteils mit bestimmten Parametern lastseitig und damit ökonomisch sinnvoll wäre. Ein Beispiel ist die Entwicklung eines neuen OMs für maximalen Strom-Erlös, bei voller Auslastung der mechanischen Belastbarkeit. Ein anderes Beispiel ist die Entwicklung eines neuen Turms, der für die gewünschten Standorte optimierte Parameter aufweist.

Gemäß einer bevorzugten Variante der obigen Ausgestaltung wird der Schritt der Lastsimulation einer Windenergieanlage für jeden der Gitterpunkte für die unterschiedlichen Betriebsmodi der Windenergieanlage durchgeführt.

Für wenigen Betriebsmodi, beispielsweise für weniger als sieben Betriebsmodi, ist die Simulation aller Betriebsmodi besonders sinnvoll.

Sind sehr viele Betriebsmodi zu berücksichtigen, ist bevorzugt die betrachtete Anzahl an Gitterpunkten pro Betriebsmodus zu reduzieren, oder, besonders bevorzugt, die Parameter der Betriebsmodi zusammen mit den Windbedingungen quasi zufällig zu variieren. Die Anzahl an benötigten Gitterpunkten ist dadurch reduziert ohne die Vorhersagegenauigkeit des Modells zu beeinträchtigen.

Gemäß einer besonders bevorzugten Variante werden in dem Schritt des Ermittelns der Lasten die Lasten für eine beliebige Kombination von Windbedingungen und eine beliebige Kombination von Betriebsparametern unter Verwendung des Prädiktionsmodells ermittelt.

Die Flexibilität des Prädiktionsmodells ist dadurch erhöht, indem eine größere Diversifizierung der Eingangsparameter einen breiteren Einsatz erlaubt. Die hohe Dimensionalität des Eingangsparameterraumes ist durch die Verwendung von Prädiktionsmodellen handhabbar, was mit strukturierten Gittern des Eingangsparameterraumes nicht der Fall ist.

Gemäß einer weiteren vorteilhaften Ausgestaltung des ersten Aspekts der Erfindung, umfasst das Verfahren weiter die folgenden Schritte: Erstellen eines Datensatzes ausgehend von der Gitterstruktur und den Ergebnissen der Lastsimulation sowie insbesondere zusätzlicher Parameter, bevorzugt einer mittleren kinetischen Energie der Turbulenz oder eines Schubbeiwerts, Trainieren des Prädiktionsmodells anhand des Datensatzes.

Die zusätzlichen Parameter können vor oder nach der Lastsimulation zu dem Datensatz hinzugefügt werden. So haben manche Parameter Einfluss auf eine einzelne Lastsimulation (z.B. Windgeschw.) und andere nicht (Shear-Äquivalent).

Letztlich gibt es in den Daten, die einer Gitterstruktur entsprechen und zum Trainieren verwendet werden, Werte, die bereits vor der Lastensimulation bekannt sind und Werte, die erst danach bekannt sind. Wann alle Werte zu einem Datensatz zusammenfügt werden, ist technisch nicht relevant, solange Abhängigkeiten eingehalten werden. Demgemäß ergibt sich der vorteilhafte Effekt des erstellten Datensatzes.

Gemäß einem zweiten Aspekt der Erfindung wird ein Trainingsdatensatz zum Trainieren eines Prädiktionsmodells zur Prädiktion von Lasten ausgehend von Windbedingungen vorgeschlagen, umfassend eine Gitterstruktur mit Gitterpunkten aus zufällig variierten Windbedingungen als Parameter, insbesondere umfassend eine Turbulenz, eine Turbulenzintensität und/oder eine Windscherung, und Ergebnisse von Lastsimulationen einer Windenergieanlage für jeden der Gitterpunkte.

In einer vorteilhaften Weiterbildung umfasst das Verfahren eine Lastvorhersage für beliebige neue Kombination von Standortparametern, Lastgrößen und Betriebsparametern und damit insbesondere eine Machbarkeitsprüfung für noch nicht entwickelte Bauteile und/oder Anlagenregelungen.

Ferner wird ein Trainingsdatensatz zum Trainieren eines Prädiktionsmodells zur Prädiktion von Lasten ausgehend von Windbedingungen vorgeschlagen, umfassend, für jeden Gitterpunkt einer Gitterstruktur aus zufällig variierten Windbedingungen als Parameter, insbesondere umfassend eine Turbulenz, eine Turbulenzintensität und/oder eine Windscherung: die Windbedingungen des Gitterpunktes und Ergebnisse von Lastsimulationen einer Windenergieanlage für den Gitterpunkt.

Die Erfindung und bevorzugte Ausführungen werden nachfolgend unter Verweis auf die beigefügten Figuren weiter beschrieben. Hierbei zeigen:
Fig. 1 schematisch und exemplarisch eine Windenergieanlage;
Fig. 2 schematisch und exemplarisch einen Windpark;
Fig. 3 ein Übersichtsdiagramm des erfindungsgemäßen Verfahrens.

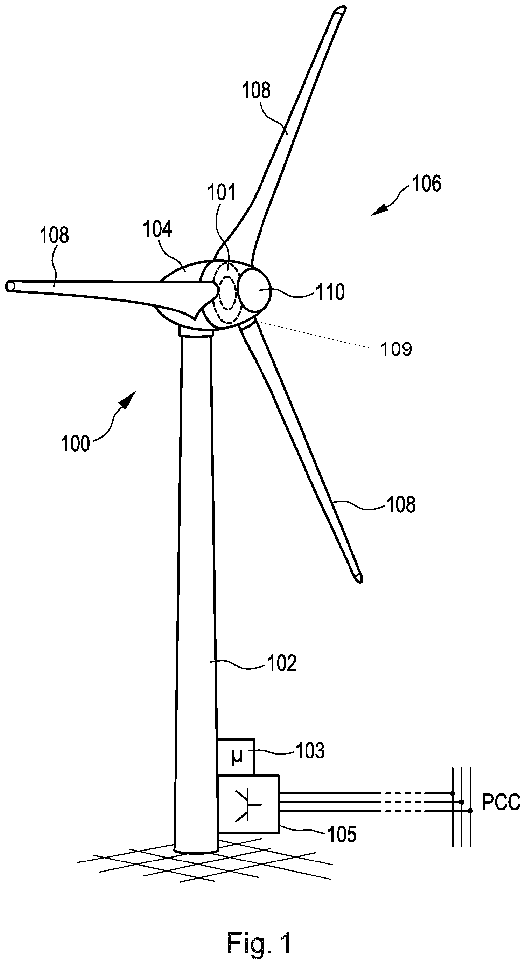

Figur 1 zeigt eine Windenergieanlage 100 mit einem Turm 102 und einer Gondel 104. An der Gondel 104 ist ein Rotor 106 mit drei Rotorblättern 108 und Rotorblattwurzeln 109 und einem Spinner 110 angeordnet. Der Rotor 106 wird im Betrieb durch den Wind in eine Drehbewegung versetzt und treibt dadurch einen Generator in der Gondel 104 an.

Die Windenergieanlage 100 weist dabei einen elektrischen Generator 101 auf, der in der Gondel 104 angedeutet ist. Mittels des Generators 101 kann elektrische Leistung erzeugt werden. Die Blattwinkel der Rotorblätter 108 können durch Pitchmotoren an Rotorblattwurzeln 109 der jeweiligen Rotorblätter 108 verändert werden. Zum Einspeisen elektrischer Leistung ist eine Einspeiseeinheit 105 vorgesehen, die besonders als Wechselrichter ausgebildet sein kann. Damit kann ein dreiphasiger Einspeisestrom und/oder eine dreiphasige Einspeisespannung nach Amplitude, Frequenz und Phase erzeugt werden, zum Einspeisen an einem Netzanschlusspunkt PCC. Das kann direkt oder auch gemeinsam mit weiteren Windenergieanlagen in einem Windpark erfolgen. Zum Steuern der Windenergieanlage 100 und auch der Einspeiseeinheit 105 ist eine Anlagensteuerung 103 vorgesehen. Die Anlagensteuerung 103 kann auch Vorgabewerte von extern, insbesondere von einem zentralen Parkrechner erhalten.

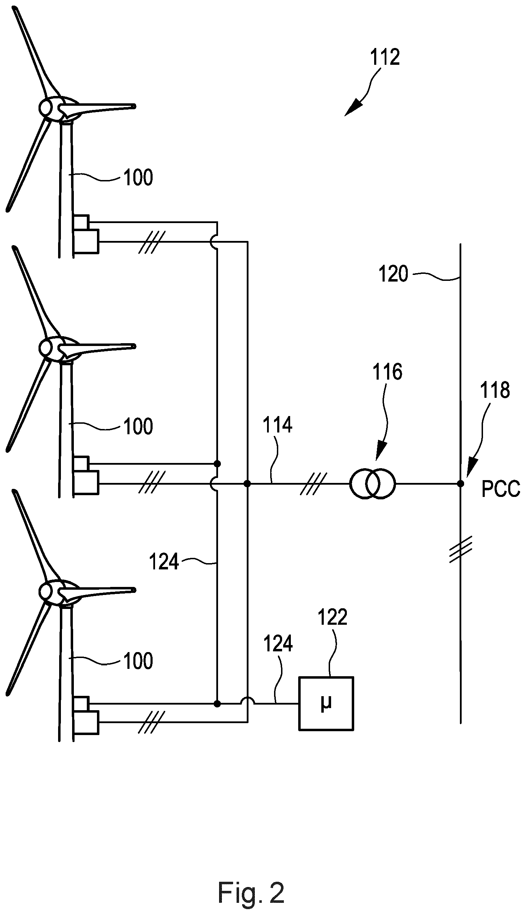

Figur 2 zeigt einen Windpark 112 mit beispielhaft drei Windenergieanlagen 100, die gleich oder verschieden sein können. Die drei Windenergieanlagen 100 stehen somit repräsentativ für im Grunde eine beliebige Anzahl von Windenergieanlagen eines Windparks 112. Die Windenergieanlagen 100 stellen ihre Leistung, nämlich insbesondere den erzeugten Strom über ein elektrisches Parknetz 114 bereit. Dabei werden die jeweils erzeugten Ströme bzw. Leistungen der einzelnen Windenergieanlagen 100 aufaddiert und meist ist ein Transformator 116 vorgesehen, der die Spannung im Park hochtransformiert, um dann an dem Einspeisepunkt 118, der auch allgemein als PCC bezeichnet wird, in das Versorgungsnetz 120 einzuspeisen. Fig. 2 ist nur eine vereinfachte Darstellung eines Windparks 112. Es kann beispielsweise das Parknetz 114 anders gestaltet sein, indem beispielsweise auch ein Transformator am Ausgang jeder Windenergieanlage 100 vorhanden ist, um nur ein anderes Ausführungsbeispiel zu nennen.

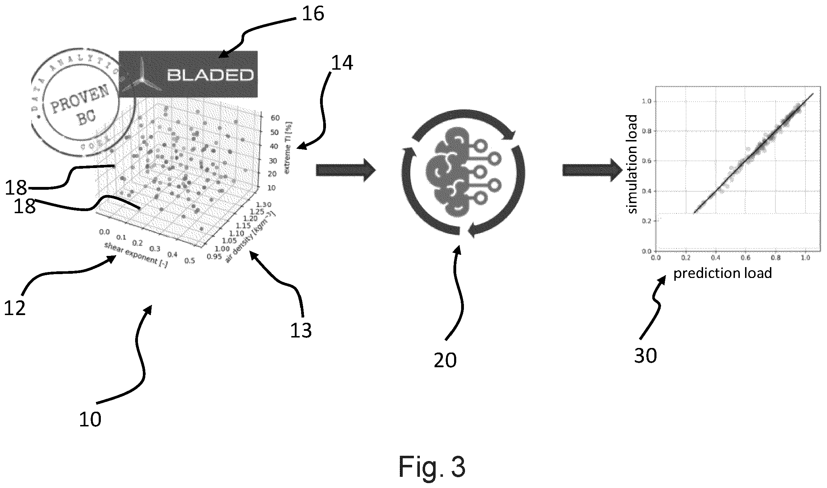

Fig. 3 zeigt schematisch und exemplarisch ein Übersichtsdiagramm des offenbarten Verfahrens.

Die Erfindung besteht darin Zeit- und Ressourcenaufwändige Rechnungen/Simulationen durch ML-Modelle zu ersetzen, indem die zur Modellerstellung erforderliche Datenbasis durch wenige Rechnungen/Simulationen in unstrukturierten, quasi zufälligen Gitterstrukturen 10 erstellt wird.

Die Gitterstruktur 10 ist in dem gezeigten Beispiel dreidimensional und umfasst einen Shear-Äquivalent 12, eine Luftdichte 13 und eine Extremturbulenzintensität 14. In diesem Beispiel sind der Shear-Äquivalent 12, die Luftdichte 13 und die Extremturbulenzintensität 14 die Windbedingungen als Parameter der Gitterstruktur.

Die Gitterstruktur 10 ist schematisch als dreidimensionales Gitter gezeichnet, in dem mehrere Gitterpunkte 18 an zufällig angeordneten Punkten abgebildet sind. Die Gitterpunkte 18 sind also nicht in einem strukturierten Gitter sondern beispielsweise mit einem random sequence Algorithmus erzeugt.

Für jeden der Gitterpunkte 18 wird eine Lastsimulation 16 einer Windenergieanlage 100, beispielsweise unter Verwendung des Programms BLADED, durchgeführt.

Aus den Gitterpunkten 18 und den dafür berechneten Lasten wird ein Trainingsdatensatz erzeugt, mit dem ein ML-Modell 20 trainiert wird. Ein Validierungsergebnis 30, das die Übereinstimmung zwischen Simulation auf der vertikalen Achse und Vorhersage des ML-Modells 20 auf der horizontalen Achse zeigt, demonstriert die Wirksamkeit des vorgeschlagenen Verfahrens. Es kann mit einer überschaubaren quasi zufälligen Anzahl von Gitterpunkten 18 und damit durchzuführenden Simulationen eine überzeugende Vorhersagegenauigkeit des ML-Modells 20 erzeugt werden.

Um die Modellgüte zu erhöhen können betrachtete Inputparameter auf bestimmte Kenngrößen reduziert oder umgerechnet werden. Beispiele dafür sind Nennleistung und Nennwindgeschwindigkeit zur Beschreibung eines Betriebsmodus (siehe unten beispielhafter Anwendungsfall 2) oder eine Umrechnung der Windscherung auf das Shear-Äquivalent 12, dass bei anderer Nabenhöhe Lastäquivalent wirkt (siehe unten beispielhafter Anwendungsfall 1).

### Beispielhafter Anwendungsfall 1:

Ein Ursache von Schäden, beispielsweise an Türmen oder Rotorblättern, war nicht hinreichend geklärt. Als eine mögliche Ursache wurde eine standortspezifische Überschreitung der mechanischen Belastbarkeit durch Extremlasten auf Grund extremer Turbulenzen für möglich gehalten. In Folge dessen sollten sämtliche Standorte der betroffenen WEA-Typen mit dem Lastfall DLC 1.3 (Extremlast bei extremer Turbulenz) mit Standortbedingungen untersucht werden.

Auf Grund der hohen Anzahl an Standorten war eine Prüfung über den manuellen Weg per Mehrkörpersimulation (MKS) nicht umsetzbar, genauso wie ein systematisches Kombinieren aller Parameterkombinationen und Anwendung mathematischer Interpolationsverfahren.

Als Lösung hat sich eine quasi zufällige Abtastung zusammen mit Methoden des maschinellen Lernens (ML) bewiesen, um ein Modell für standortspezifische Lastprognosen zu entwickeln. Auf Grund der kurzen Antwortzeit von ML-Modellen können so sämtliche problematische Standorte geprüft werden.

Im beispielhaften Anwendungsfall 1 werden also quasi zufällige Kombinationen von Standortparametern bestimmt und die zugehörigen mechanischen Lasten per Mehrkörpersimulation (MKS) für betroffene Windenergieanlagen-Typen (WEA-Typen) ermittelt. Die Lastergebnisse können mit den Standortparametern zu einem Datensatz zusammengeführt werden. Mit diesem Datensatz werden ML-Modelle gebildet, die anschließend anhand einer neuen Kombination von Standortparametern Lastprognosen für die Blattlasten beim Extremlastfall DLC 1.3 liefern.

Um ein turmunabhängiges Prognosemodell zu erhalten, wird bei Anwendung des Modells der Modellinput Windscherung auf ein Shear-Äquivalent 12 umgerechnet. Das Shear-Äquivalent dient dem Modell als Last-äquivalente Größe für die Windscherung bei einer anderen als bei Erstellung des Modells betrachteten Turmvariante.

### Beispielhafter Anwendungsfall 2:

Die Individualisierung der WEA-Typen durch verschiedene, kunden- und standortspezifisch optimierte Betriebsmodi (OMs) soll möglich sein. Diese Individualisierung soll bspw. dazu dienen die Schallemissionen zu reduzieren oder aber den Ertrag zu erhöhen, ohne die mechanischen Belastungsgrenzen (Ermüdungs- und Extremlasten) zu überschreiten. Dafür müssen bei Ermittlung der standortspezifischen Lasten nun mehrere unterschiedliche OMs sowie zusätzliche Lastfällen betrachtet werden. Auch sind weitere Standortparameter zu berücksichtigen. Weiter sollen in den WEA eines Windparks unterschiedliche OMs bspw. in Abh. der Anlagenposition und der Windrichtung betrieben werden. Da die Auswahl einer optimalen Kombination an OMs softwaregestützt durch einen Optimierer erfolgen muss, ist die Antwortzeit für die standortspezifische Lastbewertung möglichst kurz zu halten.

Auch hier ist es eine Errungenschaft der vorliegenden Erfindung, durch eine Abtastung über eine quasi zufällige Gitterstruktur, mit Entwicklung von spezifischen Kenngrößen und anschließender Anwendung von ML die gestellten Probleme lösen zu können.

Im beispielhaften Anwendungsfall 2 werden also quasi zufällige Kombinationen von Standortparametern bestimmt und die zugehörigen mechanischen Lasten per MKS für unterschiedliche Betriebsmodi (OMs) einer Anlagenvariante ermittelt. Die Lastergebnisse werden mit den Standortparametern zu einem Datensatz zusammengeführt und um OM-spezifische Parameter ergänzt. OM-spezifische Parameter können z.B. Nennleistung, Nenndrehzahl, Nennwindgeschwindigkeit sowie Anlauf- und Abschaltwindgeschwindigkeit sein. Ggf. wird der Datensatz um weitere Parameter angereichert, die einen Zusammenhang zwischen Standortparametern und Lastgrößen aufweisen. Beispiele für solche Parameter sind die mittlere kinetische Energie der Turbulenz (TKE) oder der Schubbeiwert (ct). Anschließend werden mit dem Datensatz ML-Modelle trainiert, die anschließend anhand einer neuen Kombination von Standort- und OM-Parametern Lastprognosen für Ermüdungs- als auch Extremlastfälle liefern.

Auch ist es mit dieser Erfindung möglich eine Machbarkeitsprüfung für noch nicht entwickelte Bauteile oder Anlagenregelungen (z.B. OMs) durchzuführen. Hierzu werden die OMs z.B. über Kennzahlen wie Dreh-, Schub- und Leistungskurven, Produkt aus Leistungsbeiwert und TKE, und/oder der kritischen aerodynamischen Dämpfung charakterisiert. Die so gebildeten ML-Modelle sind in der Lage Lastvorhersagen für beliebige neue Kombinationen von Inputparametern durchzuführen. So kann z.B. geprüft werden, ob die Entwicklung ein neues OMs oder eines neuen Bauteils mit bestimmten Parametern Lastseitig und damit ökonomisch sinnvoll wäre. Ein Beispiel ist die Entwicklung eines neuen OMs für maximalen Strom-Erlös, bei voller Auslastung der mechanischen Belastbarkeit. Ein anderes Beispiel ist die Entwicklung eines neuen Turms, der für die gewünschten Standorte optimierte Parameter aufweist.

Mit der Erfindung können Extrem- und Ermüdungslasten für relevante Lastquerschnitte für spezifische Windgeschwindigkeiten vorhergesagt und in Abhängigkeit der Windverteilung betrachtet werden.

Im Vergleich zum vorherigen Vorgehen mit strukturierten Gittern und mathematischer Interpolation ist bei dieser Erfindung ein wesentlich geringerer Datenumfang und im Zuge dessen auch eine Zunahme der Dimensionalität gewährleistet, was manche Anwendungen wie bspw. die Individualisierung von Betriebsmodi erst ermöglicht. Die ML-Modelle ermöglichen schnelle Antwortzeiten für sonst Zeit-/Ressourcenaufwändige Rechnungen/Simulationen. Zudem können Neuentwicklungen gezielt parametrisiert werden.

## Patentansprüche

1. Verfahren zur Ermittlung von Lasten auf Windenergieanlagen (100), umfassend
Erstellen einer Gitterstruktur (10) mit Gitterpunkten (12) aus zufällig variierten Windbedingungen als Parameter, insbesondere umfassend eine Turbulenz, eine Turbulenzintensität und/oder eine Windscherung,
Lastsimulation (16) einer Windenergieanlage (100) für jeden der Gitterpunkte (18),
Bereitstellen eines Prädiktionsmodells (20) zur Prädiktion von Lasten ausgehend von Windbedingungen,
Trainieren des Prädiktionsmodells anhand der durchgeführten Lastsimulationen für jeden der Gitterpunkte (18),
Ermitteln der Lasten für eine beliebige Kombination von Windbedingungen unter Verwendung des Prädiktionsmodells (20).

2. Verfahren nach Anspruch 1, wobei die Lastsimulation eine Mehrkörpersimulation der gesamten Windenergieanlage (100) umfasst.

3. Verfahren nach einem der Ansprüche 1 oder 2, wobei unterschiedliche Prädiktionsmodelle (20) für unterschiedliche Lasten erstellt werden, insbesondere für Blattlasten und/oder Turmlasten.

4. Verfahren nach einem der vorstehenden Ansprüche, wobei die Gitterstruktur (10) eine über den Raum näherungsweise konstante Dichte an Gitterpunkten (18) aufweist, beispiels-weise unter Verwendung eines Random Sequence Algorithmus erstellt wird.

5. Verfahren nach einem der vorstehenden Ansprüche, wobei die Windbedingungen einen Shear-Äquivalent Parameter (12) umfassen, der anhand einer Windscherung bestimmt wird.

6. Verfahren nach einem der vorstehenden Ansprüche, wobei die Windbedingungen wenigstens drei aus den folgenden oder davon abgeleitete Parameter umfassen:
- Windgeschwindigkeit
- Turbulenzintensität
- Windscherung
- Schräganströmung
- Luftdichte.

7. Verfahren nach Anspruch 6, wobei die Windbedingungen alle der genannten oder davon abgeleiteten Parameter umfassen.

8. Verfahren nach einem der vorstehenden Ansprüche, wobei die Gitterpunkte (18) zusätzlich zu den Windbedingungen bestimmte Kenngrößen umfassen.

9. Verfahren nach einem der vorstehenden Ansprüche, wobei der Schritt des Erstellens einer Gitterstruktur (10) mit Gitterpunkten (18), die Gitterstruktur mit Gitterpunkten aus zufällig variierten Windbedingungen als Parameter und Betriebsparametern erstellt, wobei die Betriebsparameter spezifische Betriebsparameter für unterschiedliche Betriebsmodi der Windenergieanlage (100) sind und
eine Nennleistung und/oder,
eine Nenndrehzahl, und/oder
eine Nennwindgeschwindigkeit, und/oder
eine Anlaufwindgeschwindigkeit und/oder
eine Abschaltwindgeschwindigkeit umfassen.

10. Verfahren nach Anspruch 9, wobei der Schritt der Lastsimulation einer Windenergieanlage (100) für jeden der Gitterpunkte für die unterschiedlichen Betriebsmodi der Windenergieanlage (100) durchgeführt wird.

11. Verfahren nach Anspruch 10, wobei der Schritt des Ermittelns der Lasten die Lasten für eine beliebige Kombination von Windbedingungen und eine beliebige Kombination von Betriebsparametern unter Verwendung des Prädiktionsmodells ermittelt.

12. Verfahren nach einem der vorstehenden Ansprüche, wobei die Gitterstruktur (10) ferner Betriebsmodi umfasst und für die Erzeugung der Gitterpunkte (18) Parameter verschiedener Betriebsmodi quasi zufällig variiert werden.

13. Verfahren nach einem der vorstehenden Ansprüche umfassend die folgenden Schritte:
Erstellen eines Datensatzes aus den Parametern der Gitterpunkte (18), also den Standortparametern, den Ergebnissen der Lastsimulation, also den Lastgrößen, optional wenigstens einem Betriebsparameter, sowie wenigstens eines zusätzlichen Parameters, der einen Zusammenhang zwischen den Standortparametern und den Lastgrößen, bevorzugt eine mittlere kinetische Energie der Turbulenz, TKE, und/oder einen Schubbeiwerts und
Trainieren des Prädiktionsmodells anhand des erstellten Datensatzes.

14. Verfahren nach Anspruch 13, wobei das Verfahren eine Lastvorhersage für beliebige neue Kombination von Standortparametern, Lastgrößen und Betriebsparametern und damit insbesondere eine Machbarkeitsprüfung für noch nicht entwickelte Bauteile und/oder Anlagenregelungen umfasst.

15. Trainingsdatensatz zum Trainieren eines Prädiktionsmodells zur Prädiktion von Lasten ausgehend von Windbedingungen umfassend
für jeden Gitterpunkt (18) einer Gitterstruktur (10) aus zufällig variierten Windbedingungen als Parameter, insbesondere umfassend eine Turbulenz, eine Turbulenzintensität und/oder eine Windscherung:
die Windbedingungen (12, 13, 14) des Gitterpunktes (18) und
Ergebnisse von Lastsimulationen einer Windenergieanlage (100) für den Gitterpunkt (18).
